# EUROPEAN PATENT APPLICATION

(11) **EP 1 286 545 A2**
(43) Date of publication of application: **26.02.2003**
(21) Application number: 02018508.8
(22) Date of filing: 16.08.2002
(51) Int. Cl.: H04N 5/93, H04N 5/44

(54) **Image reproducing method and apparatus**

(30) Priority: 17.08.2001 JP 2001248032
(71) Applicant: Kabushiki Kaisha Toshiba, Tokyo (JP)
(72) Inventor: Tanaka, Toshiaki, 1-chome ,Minato-ku, Tokyo 105-8001 (JP)
(74) Representative: Henkel, Feiler, Hänzel

(57) **Abstract**

In a case where a first operation section (16) selects between a video signal in a first scheme and a video signal in a second scheme, a second operation section (32) selects between video signals including the video signal of the scheme selected at the first operation section and those of lower-order schemes than the selected scheme and outputs the selected video signal, when there are video signals of lower-order schemes than the scheme selected at the first operation section.

## Description

This invention relates to improvements in an image reproducing apparatus and an image reproducing method which are capable of outputting video signals of a plurality of schemes.

In recent years, such commercially available video apparatuses as DVD (Digital Versatile Disk) players for playing back DVDs have been popularized. In DVDs, color video signals are recorded digitally in the form of components.

Therefore, neither cross-color interference nor dot interference occurs in principle between the luminance signal and the color signal differently to the composite signal in the NTSC (National Television System Committee) system. Thus, many DVD players are provided with a color difference signal component output terminal, thereby achieving high-quality images.

The present television system has used interlace scanning to transmit video signals in a narrower band. Interlace scanning is the technique for scanning the odd lines first, followed by the even lines. Only one half of the picture (frame), known as a field, is scanned each time. A complete picture therefore consists of two fields, odd and even.

Specifically, interlace scanning requires two fields to give representation of one frame. Since the timing with which each field is given is shifted one field drawing time from another, the timing shift results in flicker. That is, this appears to the human eye as flicker.

When pictures are displayed on the CRT (Cathode Ray Tube) or the like of a television receiver, errors occurring in the synchronizing circuit or deflecting circuit cause various drawbacks resulting in a decrease in the picture quality. The drawbacks include a pairing phenomenon. In this phenomenon, errors in the synchronizing circuit or deflecting circuit prevent the scanning lines of one field from fitting in the middle between the corresponding scanning lines of the other field, with the result that the scanning lines of one field deviate a little from the middle between the corresponding scanning lines of the other field.

To cope with the aforementioned drawbacks, the technique known as progressive scanning has been developed. Since one frame can be drawn at a time in progressive scanning, this scanning can prevent the above drawbacks from occurring. On the other hand, drawing one frame at a time requires the scanning lines to be drawn at twice the present speed. Accordingly, the television receiver is required to deal with this speed.

Many types of commercially available DVD players take into account users in various intellectuals ranging from ordinary users to users with specialized knowledge. Therefore, DVD payers are required to have the capability of outputting both interlace-scanning-scheme video signals and progressive-scanning-scheme video signals.

In this case, it is undesirable to provide special output terminals for outputting video signals of the two schemes separately, when the mounting space for DVD player's terminals, cost, and the television receiver's terminals (for example, interlace-scanning/progressive-scanning video signals are inputted to a common terminal) are taken into account.

That is, it is desirable that DVD players should enable users to selectively switch between interlace-scanning video signals and progressive-scanning video signals at the common output terminals.

A remote controller is easy to use as switching means which enables the user to selectively output either interlace-scanning-scheme video signals or progressive-scanning-scheme video signals and output the selected video signal at the common output terminals.

Specifically, each time the user operates the switching key provided on the remote controller, the interlace-scanning-scheme video signal and the progressive-scanning-scheme video signal are outputted alternately at the common output terminal.

If the switching state is stored in a nonvolatile memory, it is possible to automatically output the video signal of the same scanning scheme as before the turning off of the power supply of the DVD player, when the power supply is turned on after the DVD player is turned off.

Since the remote controller is used for various operations and has many keys to control the DVD player, there is a possibility that the user will operate the keys erroneously. For instance, when the television receiver connected to the DVD player is compatible with the progressive-scanning scheme, there is no problem, even if the user selects either the interlace-scanning mode or the progressive-scanning mode. However, when the television receivers connected to the DVD player is compatible with only the interlace-scanning scheme, the pictures collapse when the output is switched to the progressive-scanning mode.

As described above, users are composed of various intellectuals. In the ordinary users who use interlace-scanning-compatible television receivers, there are some who know neither the interlace-scanning mode nor the progressive-scanning mode. In this case, when the user operates the remote controller erroneously to switch to the progressive-scanning mode, there arises a problem: the pictures are disturbed and therefore the user might mistake this for a failure.

To deal with such a problem, the approach of providing a two-contact slide switch on the back of the DVD player body has been considered as means for switching between the interlace-scanning mode and the progressive-scanning mode. With this approach, there is almost no possibility that the user will touch the slide switch in normal operations. Thus, once the switch is set to the interlace-scanning mode, the problem of switching to the progressive-scanning mode due to an erroneous operation will not occur.

In this approach, however, when users with specialized knowledge switch actively between the interlace-scanning mode and the progressive-scanning mode, they have to go to the DVD player body and operate the slide switch, which makes the switching operation troublesome.

In the progressive-scanning mode, since scanning lines, which do not exist at first, are formed and displayed, they look different, depending on the state of the original video signal or the way of processing. Therefore, the progressive-scanning mode does not always provide higher-quality pictures than the interlace-scanning mode. Therefore, users with specialized knowledge switch between the interlace-scanning mode and the progressive-scanning mode and select the mode that provides a better picture quality. As a result, it is inconvenient to switch between the two modes.

It is accordingly an object of the present invention to provide an image reproducing apparatus and an image reproducing method which improve the convenience of the user, when performing a switching operation to selectively output video signals of a plurality of schemes at a common output terminal.

According to an aspect of the present invention, there is provided an image reproducing apparatus comprising: a first operation section configured to select between video signals of a plurality of schemes; and a second operation section configured to select between video signals including the video signal of the scheme selected at the first operation section and those of lower-order schemes than the selected scheme and outputting the selected video signal, when there are video signals of lower-order schemes than the scheme selected at the first operation section.

According to another aspect of the present invention, there is provided an image reproducing method comprising: causing a first operation section to select between video signals of a plurality of schemes; and causing a second operation section to select between video signals including the video signal of the scheme selected at the first operation section and those of lower-order schemes than the selected scheme and output the selected video signal, when there are video signals of lower-order schemes than the scheme selected at the first operation section.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic diagram to help explain how a DVD player is connected to a television receiver, showing an embodiment of the present invention;
FIG. 2 is a block diagram to help explain the details of the DVD player in the embodiment;
FIG. 3 is an outward appearance to help explain a remote controller for the DVD player in the embodiment; and
FIG. 4 is a flowchart to help explain the switching operation of the DVD player in the embodiment.

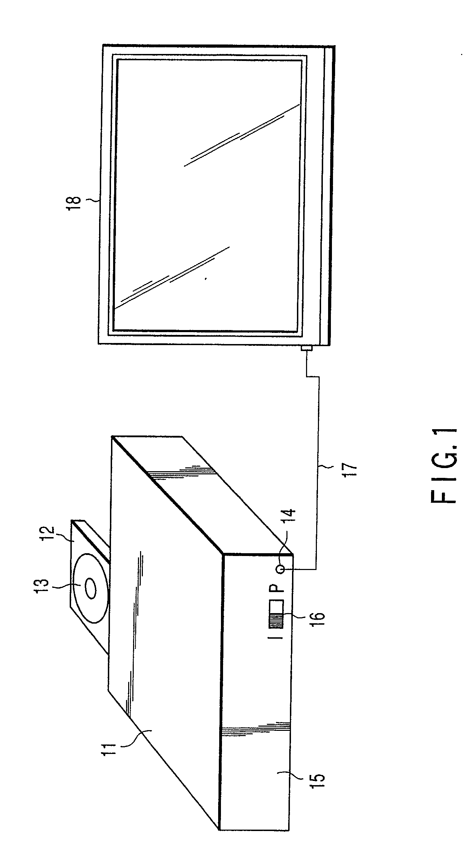

Hereinafter, referring to the accompanying drawings, an embodiment of the present invention will be explained in detail. In FIG. 1, numeral 11 indicates a DVD player. The DVD player 11 can play back a DVD 13 installed via a tray 12.

The DVD player 11 can switch between the interlace-scanning mode and the progressive-scanning mode and selectively output at a common output terminal 14 the video signal obtained by playing back the DVD 13.

The switching of the output is effected by a two-contact slide switch 16 provided on the back panel 15 of the body of the DVD player 11 and a remote controller (not shown in FIG. 1).

The video signal outputted from the output terminal 14 is supplied via a cable 17 to an interlace-scanning-compatible or a progressive-scanning-compatible television receiver 18, which displays pictures.

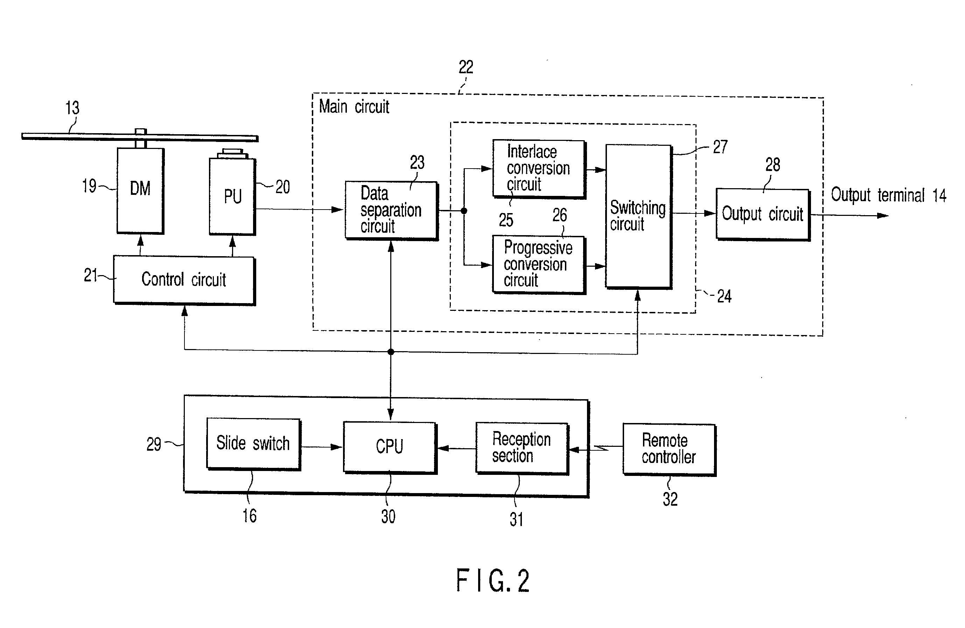

FIG. 2 shows the details of the DVD player 11. Specifically, the DVD 13 is rotated by a disk motor 19. An optical pickup 20 provided so as to be movable radially reads the recorded data from the DVD 13.

The rotation speed of the disk motor 19 is controlled by a control circuit 21. The control circuit 21 also controls the data reading operations of the optical pickup 20, including the operations of the radial transport system and various types of servo systems.

Then, the data read by the optical pickup 20 is supplied to a data separation circuit 23 constituting a main circuit 22. The data separation circuit 23 separates the data into a video data component and an audio data component. The video data component is converted by a video processing circuit 24 into a video signal.

The video processing circuit 24 is composed of an interlace conversion circuit 25 which converts the inputted video data component into interlace-scanning-scheme video signals, a progressive conversion circuit 26 which converts the inputted video data component into progressive-scanning-scheme video signals, and a switching circuit 27 which chooses between the video signal outputted from the interlace conversion circuit 25 and that from the progressive conversion circuit 26.

Then, the interlace-scanning-scheme or progressive-scanning-scheme video signal chosen at the switching circuit 27 is supplied to an output circuit 28, which converts the signal into a form suitable for the television receiver 18 to give representation of pictures. The converted signal is directed to an output terminal 14.

The interlace conversion circuit 25 and progressive conversion circuit 26 in the video processing circuit 24 are generally composed of microcodes, or in software. In this case, depending on the computing capability of the video processing circuit 24, it may be difficult to operate the interlace conversion circuit 25 and the progressive conversion circuit 26 at the same time. In such a case, the switching circuit 27 chooses the microcode for one of the interlace conversion circuit 25 and the progressive conversion circuit 26 and operates the chosen circuit, thereby choosing the video signal of the necessary scheme.

The aforementioned series of video playback operations are supervised by a CPU (Central Processing Unit) 30 constituting a control section 29. That is, on the basis information about the operation of a remote controller 32 inputted via a reception section 31, the CPU 30 controls the control circuit 21, data separation circuit 23, and switching circuit 27. In addition, the CPU 30 controls the switching circuit 27 on the basis of information about the operation of the slide switch 16.

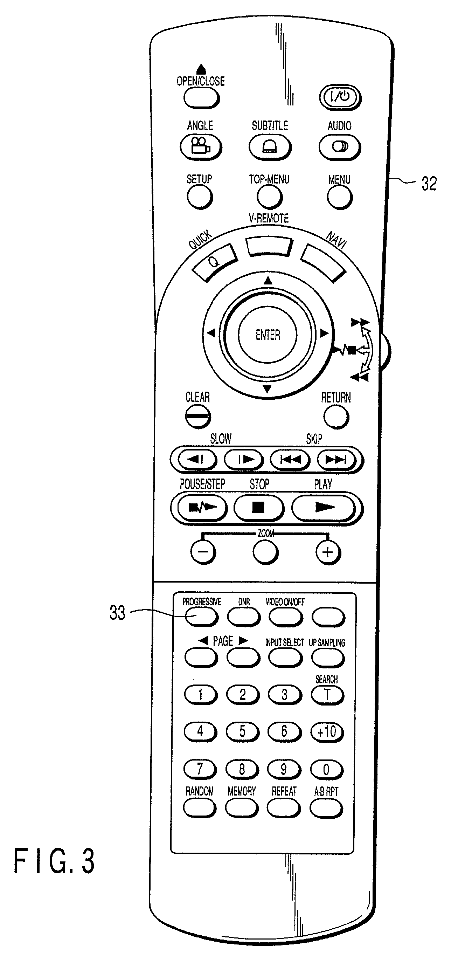

FIG. 3 shows an outward appearance of the remote controller 32. The remote controller 32 is provided with various keys for controlling the DVD player 11 into various operating states or the stop state. A detail explanation of the remote controller 32 will be omitted. On the basis of information about the operation of a switching key 33 on the remote controller 32, the CPU 30 controls the switching circuit 27.

Explanation will be given as to how the CPU 30 controls the switching circuit 27 on the basis of information about the operation of the slide switch 16 and information about the operation of the switching key 33 of the remote controller 32.

In a state where the slide switch 16 is set to the interlace-scanning mode, the CPU 30 controls the switching circuit 27 so as to direct the video signal outputted from the interlace conversion circuit 25 to the output circuit 28, regardless of the operation of the switching key 33 of the remote controller 32.

Specifically, in the state where the slide switch 16 is set to the interlace-scanning mode, the interlace-scanning-scheme video signal is outputted at the output terminal 14, regardless of the operation of the switching key 33 of the remote controller 32.

On the other hand, in a state where the slide switch 16 is set to the progressive-scanning mode, each time the switching key 33 of the remote controller 32 is operated, the CPU 30 controls the switching circuit 27 so as to direct the video signals outputted from the interlace conversion circuit 25 and progressive conversion circuit 26 alternately to the output circuit 28.

Specifically, in the state where the slide switch 16 is set to the progressive-scanning mode, each time the switching key 33 of the remote controller 32 is operated, the interlace-scanning-scheme and progressive-scanning-scheme video signals are outputted alternately at the output terminal 14.

In other words, when there is a lower-order video scheme than the video scheme set in the slide switch 16, it is possible to select not only the video scheme set in the slide switch 16 but also the lower-order video scheme chosen by the remote controller 32. Therefore, when there is no lower-order video scheme than the video scheme set in the slide switch 16, the operation of the remote controller 32 is made ineffective.

The lower-order video scheme is a video scheme with a lower horizontal frequency, or a video scheme with a lower resolution. The resolution correlates with the horizontal frequency, although influenced by the vertical frequency in the strict sense of the word. The vertical frequency of the television signal is about 50 Hz or 60 Hz. Since the difference between the two frequencies is about 20%, if the difference between the two horizontal frequencies exceeds 20%, the video scheme with the lower horizontal frequency can be regarded as being sufficiently low-order video scheme as compared with the video-scheme with the higher horizontal frequency.

In the embodiment, the horizontal frequency of the progressive-scanning mode is twice as high as that of the interlace-scanning mode. Therefore, the interlace-scanning mode can be considered to be a sufficiently low-order video scheme as compared with the progressive-scanning mode.

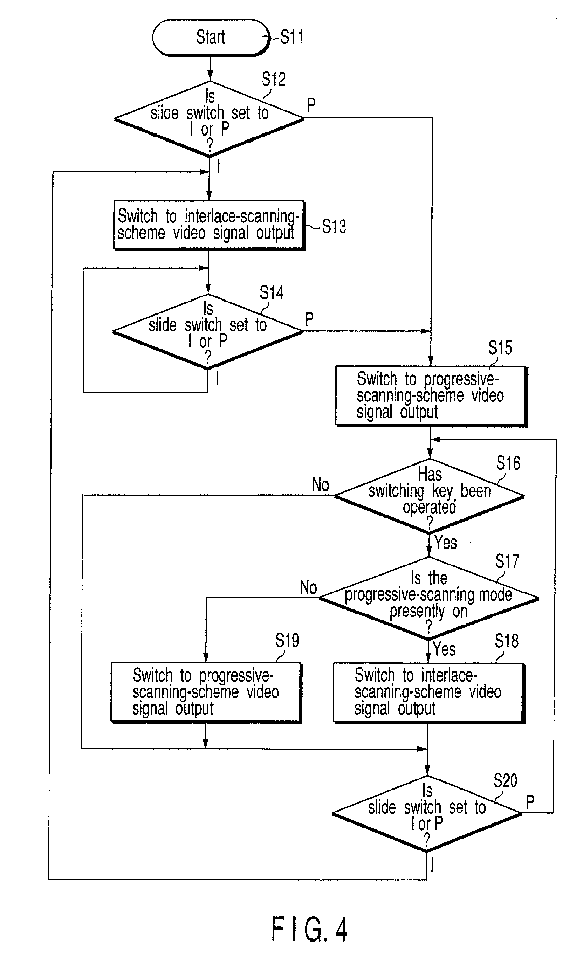

FIG. 4 is a flowchart to help explain how the CPU 30 controls the operation of the switching circuit 27. When starting to control the switching circuit 27 (step S11), the CPU 30 determines in step S12 whether the slide switch 16 is set to the interlace-scanning mode or the progressive-scanning mode.

If having determined that the slide switch 16 is set to the interlace-scanning mode (I), the CPU 30, in step S13, controls the switching circuit 27 in such a manner that the switching circuit 27 outputs the interlace-scanning-scheme video signal outputted from the interlace conversion circuit 25.

Specifically, when the slide switch 16 is set to the interlace-scanning mode, there is no lower-order video scheme than the interlace-scanning scheme. Therefore, the CPU 30 controls the switching circuit 27 in such a manner that the switching circuit 27 outputs the interlace-scanning-scheme video signal, without determining the operation of the switching key 33 of the remote controller 32. Then, in step S14, the CPU 30 waits for the slide switch 16 to be set to the progressive-scanning mode.

Then, in step S12 or step S14, when having determined that the slide switch 16 is set to the progressive-scanning mode (P), the CPU 30, in step S15, controls the switching circuit 27 in such a manner that the switching circuit 27 outputs the progressive-scanning-scheme video signal outputted from the progressive conversion circuit 26.

Thereafter, the CPU 30, in step S16, determines whether the switching key 33 of the remote controller 32 has been operated. If having determined that the switching key 33 has been operated (YES), the CPU 30, in step S17, determines whether the switching circuit 27 is presently switched so as to output the progressive-scanning-scheme video signal.

If having determined that the switching circuit 27 has been switched to the progressive-scanning mode (YES), the CPU 30, in step S18, controls the switching circuit 27 in such a manner that the switching circuit 27 outputs the interlace-scanning-scheme video signal outputted from the interlace conversion circuit 25. If having determined that the switching circuit 27 has not been switched to the progressive-scanning mode (NO), the CPU 30, in step S19, controls the switching circuit 27 in such a manner that the switching circuit 27 outputs the progressive-scanning-scheme video signal outputted from the progressive conversion circuit 26.

Then, after step S18 or step S19, or when having determined in step S16 that the switching key 33 of the remote controller 32 has not been operated (NO), the CPU 30, in step S20, determines whether the slide switch 16 is set to the interlace-scanning mode or the progressive-scanning mode. If having determined that the slide switch 16 is set to the interlace-scanning mode (I), the CPU 30 returns control to step S13. If having determined that the slide switch 16 is set to the progressive-scanning mode (P), the CPU 30 returns control to step S16.

In the embodiment, the slide switch 16 is set to the interlace-scanning mode for ordinary users who use interlace-scanning-compatible television receivers 18. This setting makes the operation of the switching key 33 of the remote controller 32 ineffective, which prevents the output from being switched erroneously to the progressive-scanning mode.

In addition, the slide switch 16 is set to the progressive-scanning mode for users with specialized knowledge who use progressive-scanning-compatible television receivers 18. With this setting, just operating the switching key 33 of the remote controller 32 makes it possible to selectively switch between the interlace-scanning-scheme video signal and the progressive-scanning-scheme video signal, which improves the convenience of users.

In the embodiment, explanation has been given as to how to switch between two types of video signals, the interlace-scanning-scheme video signal and the progressive-scanning-scheme video signal. In the future, when television receivers are made compatible with three types of video signals, 480I, 480P, and 720P (where the numbers indicate the number of effective scanning lines, 480I is the same signal as that in the present NTSC system, 480P is the progressive conversion signal of 480I, and 720P is a signal obtained by converting 480P into a signal whose number of scanning lines is 1.5 times that of 480P), the slide switch 16 will have three switching positions, 480I, 480P, and 720P.

In this case, setting the slide switch 16 to 480P enables the remote controller 32 to switch to 480I, a lower-order scheme than that of 480P. Setting the slide switch 16 to 720P enables the remote controller 32 to switch to 480I and 480P lower-order schemes than that of 720P.

Furthermore, when the power switch of the DVD player 11 is turned on, the CPU 30 can switch the switching circuit 27 in such a manner that the video scheme set in the slide switch 16 is selected as the initial state.

In addition, when the slide switch 16 is switched, the CPU 30 can switch the switching circuit 27 in such a manner that the video scheme set in the slide switch 16 is selected, regardless of the present switching state.

## Claims

1. An image reproducing apparatus **characterized by** comprising:
a first operation section (16) configured to select between video signals of a plurality of schemes; and
a second operation section (32) configured to select between video signals including the video signal of the scheme selected at said first operation section (16) and those of lower-order schemes than the selected scheme and outputting the selected video signal, when there are video signals of lower-order schemes than the scheme selected at the first operation section (16).

2. The image reproducing apparatus according to claim 1, **characterized in that** said first operation section (16) makes the operation of said second operation section (32) disable, when there is no video signal of a lower-order scheme than the scheme selected at the first operation section (16).

3. The image reproducing apparatus according to claim 1, **characterized in that** said first operation section (16) is a switch provided on the image reproducing apparatus (11) and said second operation section (32) is a remote controller for controlling said image reproducing apparatus (11).

4. The image reproducing apparatus according to claim 1, **characterized in that** said video signals of the plurality of schemes include video signals in an interlace-scanning scheme and video signals in a progressive-scanning scheme.

5. The image reproducing apparatus according to claim 1, **characterized in that** a video signal of the scheme selected at said first operation section (16) is outputted at the time when the power supply of the body of the image reproducing apparatus (11) is turned on.

6. The image reproducing apparatus according to claim 1, **characterized in that** a video signal of the scheme selected at said first operation section (16) is outputted, regardless of the present switching state, when said first operation section (16) is operated.

7. An image reproducing method **characterized by** comprising:
causing a first operation section (16) to select between video signals of a plurality of schemes; and
causing a second operation section (32) to select between video signals including the video signal of the scheme selected at said first operation section (16) and those of lower-order schemes than the selected scheme and output the selected video signal, when there are video signals of lower-order schemes than the scheme selected at the first operation section (16).

8. The image reproducing method according to claim 7, **characterized in that** the operation of said second operation section (32) disable, when there is no video signal of a lower-order scheme than the scheme selected at the first operation section (16).

9. The image reproducing method according to claim 7, **characterized in that** said first operation section (16) is a switch provided on an image reproducing apparatus (11) and said second operation section (32) is a remote controller (32) for controlling said image reproducing apparatus (11).

10. The image reproducing method according to claim 7, **characterized in that** said video signals of the plurality of schemes include video signals in an interlace-scanning scheme and video signals in a progressive-scanning scheme.

11. The image reproducing method according to claim 7, **characterized in that** a video signal of the scheme selected at said first operation section (16) is outputted at the time when the power supply of the image reproducing apparatus (11) is turned on.

12. The image reproducing method according to claim 7, **characterized in that** a video signal of the scheme selected at said first operation section (16) is outputted, regardless of the present switching state, when said first operation section (16) is operated.
